# EUROPEAN PATENT SPECIFICATION

(11) **EP 0 738 755 B1**
(45) Date of publication and mention of the grant of the patent: **10.03.1999**
(21) Application number: 96302707.3
(22) Date of filing: 17.04.1996
(51) Int. Cl.: C08L 21/00, C08K 3/36

(54) **Rubber composition**
Kautschukmischung
Composition de caoutchouc

(30) Priority: 17.04.1995 JP 91188/95
(43) Date of publication of application: 23.10.1996
(73) Proprietor: Sumitomo Chemical Company, Limited, Chuo-ku Osaka 541-8550 (JP)
(72) Inventor: Yamamoto, Keisaku, Ichihara-shi, Chiba (JP); Wakatsuki, Kizuku, Ibaraki-shi, Osaka 567 (JP); Saba, Hayato, Funabashi-shi, Chiba (JP)
(74) Representative: Cresswell, Thomas Anthony

(56) References cited:
- US-A- 3 768 537
- US-A- 3 873 489
- REVUE GENERALE DU CAOUTCHOUC, vol. 39, no. 11, 1962, PARIS, FR, pages 1727 - 1737, XP002010182 A.HEAHL AND M.MONTU 'INFLUENCE DES POLYETHYLENEGLYCOLS SUR LE RENFORCEMENT DES ELASTOMERES PAR LES SILICES ET LES ALUMINOSILICATES'

## Description

The present invention relates to a rubber composition. More precisely the present invention relates to a rubber composition which has sufficiently improved wet-skid resistance and rolling resistance and is excellent in processability because of absence of bleed on surface when converted into a vulcanized rubber.

Rubber compositions containing silica and a silane coupling agent have been widely used for colored or white rubbers on the grounds that they are easily colored as compared with rubber compositions containing carbon black.

They have also been used for tires as they have a small loss in energy at room temperature or hotter. The rubber compositions containing silica and a silane coupling agent, however, had problems that they were insufficient in improvement of wet-skid resistance and rolling resistance, and were poor in processability when converted into vulcanized rubbers.

US-A-3873489 discloses additives for rubber mixtures containing silicate or silica filler, which additives have the formula Z-alk-Sₙ-alk-Z in which Z is 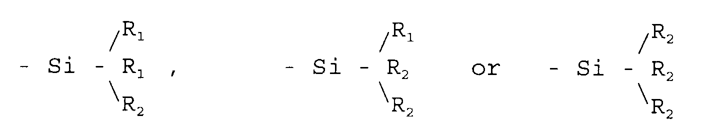 wherein R₁ is C₁-C₄ alkyl, cyclohexyl or phenyl and R₂ is C₁-C₈ alkoxy, C₅-C₈ cycloalkoxy or straight or branched chain C₁-C₈ alkylmercapto, alk is a C₁-C₁₈ hydrocarbon group and n is an integer of 2 to 6. However, the wet-skid resistance, rolling resistance and rubber elasticity of the rubbers disclosed in US-A-3873489 are insufficient.

As the results of extensive studies for a rubber composition having no such problems, the present inventors have found that rubber compositions obtainable by kneading a specific polyalkylene glycol into a solution polymerized styrene-butadiene rubber containing silica and a silane coupling agent at a specific temperature have sufficiently improved wet-skid resistance and rolling resistance when converted into vulcanized rubbers and are excellent in processability because of absence of bleed on surface when converted into vulcanized rubbers, and thus have completed the present invention.

Accordingly, the present invention provides a rubber composition obtainable by kneading a mixture comprising 100 parts by weight of component (A), from 5 to 100 parts by weight of component (B), from 1 to 15 parts by weight of component (C), and from 1 to 15 parts by weight of component (D), the maximum temperature during the kneading being from 120 to 170°C, wherein component (A) is a solution polymerised styrene-butadiene rubber, component (B) is silica, component (C) is a silane coupling agent and component (D) is a polyalkylene gycol having a weight average molecular weight of from 200 to 20,000.

The present invention is described in more detail below.

The component (A) in the present invention is a solution polymerized styrene-butadiene rubber. While the precise structure of the solution polymerized styrene-butadiene rubbers is not particularly limited, said rubbers have a Mooney viscosity (ML₁₊₄ 125°C) preferably of 40 - 140 and more preferably of 50 - 120, from the viewpoint of kneading processability. The component (A) can be obtained by well-known solution-polymerization method which comprises polymerizing styrene and butadiene in a solvent such as hydrocarbons and the like using an initiator such as a organolithium compound. Also from the viewpoint of kneading processability, they are preferably produced with addition of a coupling agent such as SiCl₄, SnCl₄ or the like in solution polymerization so that a part or the whole of them contains a branched component. From the viewpoint of tire use, a solution polymerized styrene-butadiene rubber is advantageous. These rubbers may be used independently or in combination thereof.

The component (B) in the present invention is silica. There are various kinds of silica which differ in properties such as in concentration of surface hydroxyl groups, pH and particle properties. While silica used in the present invention is not limited, preferably the silica has a DBA (dibutylamine) absorption of 100-400 mmol/kg. Typically it has a BET specific surface area of 50-300 m²/g. Typically it has a pH of 5-12.

The amount of the component (B) in the rubber composition of the present invention is 5-100 parts by weight, preferably 30-90 parts by weight per 100 parts by weight of the component (A). If the amount of the component (B) is too small, the mechanical strength, such as the tear strength, of the vulcanized rubber is lowered. When the amount of the component (B) is too much, the kneading processability and mechanical strength of the vulcanized rubber are lowered.

The component (C) in the present invention is a silane coupling agent. Specific examples of the silane coupling agent include compounds represented by the formulae (1) or (2) shown below. These compounds may be used independently or in combination thereof.

[(OR)₃SiCₐH₂ₐ]₂S_{b} (1)

(OR)₃SiCₐH₂ₐZ (2)

In the above formulae, R represents a methyl group or an ethyl group. The ethyl group is preferred. Further a represents an integer of 1-8, preferably 1 to 6 and more preferably an integer of 2-5, b represents an integer of 1-6 and preferably an integer of 2-5 and Z represents a mercapto group, an epoxy group (-CHOCH₂) a vinyl group or an amino group optionally substituted by one or two methyl or ethyl groups. When Z is an amino group it is preferably dimethylamino.

Examples of the compounds represented by the formula (1) include bis(trimethoxysilymethyl) disulfide, bis(2-trimethoxysilyethyl) disulfide, bis(2-trimethoxysilyethyl) tetrasulfide, bis(2-trimethoxysilylethyl) pentasulfide, bis(2-trimethoxysilylethyl) hexasulfide, bis(3-trimethoxysilylpropyl) disulfide, bis(3-trimethoxysilylpropyl) trisulfide, bis(3-trimethoxysilylpropyl) tetrasulfide, bis(3-trimethoxysilylpropyl) pentasulfide, bis(3-trimethoxysilylpropyl) hexasulfide, bis(4-trimethoxysilylbutyl) tetrasulfide, compounds in which the methoxy group in the above listed compounds is replaced by an ethoxy group and the like.

Examples of the compounds represented by the formula (2) include 1-mercapto-2-trimethoxysilylethane, 1-mercapto-3-trimethoxysilylpropane, 1-mercapto-4-trimethoxysilylbutane, 1,2-epoxy-3-trimethoxysilylpropane, 1,2-epoxy-4-trimethoxysilylbutane, 3-trimethoxysilyl-1-propene, 4-trimethoxysilyl-1-butene, 1-dimethylamino-2-trimethoxysilylethane, 1-dimethylamino-3-trimethoxysilylpropane, 1-dimethylamino-4-trimethoxysilylbutane, compounds in which the methoxy group in the above listed compounds is replaced by an ethoxy group and the like.

Among the compounds represented by the formulae (1) or (2), bis(3-triethoxysilylpropyl) trisulfide, bis(3-triethoxysilylpropyl) tetrasulfide, and bis(3-triethoxysilylpropyl) pentasulfide are preferred.

The amount of the component (C) in the rubber composition of the present invention is 1-15 parts by weight, preferably 2-10 parts by weight per 100 parts by weight of the component (A). If the amount of the component (C) is too small, the vulcanization velocity and the mechanical strength of the vulcanized rubber are lowered. When the amount is too much, the mechanical strength is lowered and the production cost is increased. When two or more of the compounds are used as the component (C), the amount of component (C) is considered to be the total amount of all kind of the compounds used as the component (C).

The component (D) in the present invention is a polyalkylene glycol having a weight average molecular weight of 200-20,000. The weight average molecular weight of the component (D) is preferably 250-10,000 and more preferably 300-8,000. The alkylene groups in component (D) may be the same or different. Preferably each alkylene group has from 1 to 6 carbon atoms. More preferably, each alkylene group is ethylene or propylene. The polyalkylene glycol (D) is typically a homopolymer, a block copolymer or a random copolymer.

Specific examples of the polyalkylene glycol include polyethylene glycol, polypropylene glycol, an ethylene oxide-propylene oxide random copolymer, an ethylene oxide-propylene oxide block copolymer and the like. If the weight average molecular weight of the component (D) is too small, adhesion failure due to bleed may occur on the surface of the vulcanized rubber. When said molecular weight is too large, improving effect on wet-skid resistance and rolling resistance is insufficient and blooming may occur on the surface of the vulcanized rubber.

The amount of the component (D) in the rubber composition of the present invention is 1 - 15 parts by weight, preferably 1 - 12 parts by weight per 100 parts by weight of the component (A). If the amount of the component (D) is too small, the effects of improving wet-skid resistance or rolling resistance are lowered. When the amount is too much, the mechanical strength or abrasion resistance are lowered and further bleed on the surface of the vulcanized rubber may occur. Said bleed on the surface of the vulcanized rubber results in adhesion failure between the vulcanized rubber comprising the composition of the present invention and another material.

The rubber composition of the present invention can be obtained by kneading the predetermined amounts of the components (A) - (D) as described above under conditions in which the maximum temperature during the kneading is from 120 to 170°C. If the temperature is too low, the mechanical strength of the vulcanized rubber is lowered. When the temperature is too high, deterioration of the vulcanized rubber is occured. The minimum temperature during the kneading is at least 0°C, preferably at least 20°C. If the minimum temperature is too low, the molecular chain scission of component (A) in the first stage of the kneading is remarkably occurred and the economical efficiency is low because the kneading time till the maximum temperature becomes long.

The kneading may be performed by using a usual kneading machine such as rolls, a Banbury mixer and the like until the components are uniformly mixed. In kneading, a common general rubber such as a natural rubber, an emulsion polymerized butadiene rubber, an emulsion polymerized styrene-butadiene rubber and the like, carbon black, an antioxidant, a vulcanising agent, a vulcanizing accelerator, a processing aid, stearic acid, a reinforcing agent, a filler, a plasticizer, a softening agent and the like may be added in addition to the components (A) - (D) which are essential to the present invention.

When the above general rubber other than the component (A) is added to the rubber composition of the present invention, the weight ratio of the general rubber to the component (A) is preferably 0.6 or less and more preferably 0.45 or less. If the weight ratio of the general rubber is too large, the effect of improving wet-skid resistance and rolling resistance may be lowered.

When carbon black is added to the rubber composition of the present invention, it is preferred to use carbon black having an iodine adsorption of 60 mg/g or more and a dibutyl phthalate oil absorption of 80 ml/100 g or more in an amount preferably of 100 parts by weight or less and more preferably of 60 parts by weight or less per 100 parts by weight of the component (A).

The unvulcanized rubber obtainable by kneading the rubber composition of the present invention can be converted into a vulcanized rubber by vulcanizing preferably at 100 - 250°C and more preferably at 130 - 200°C.

As the vulcanization agent, commonly used sulfur and peroxides such as organic peroxides can be used and sulfur is preferred. The vulcanization agent is used in an amount preferably 0.1 - 5 parts by weight and more preferably of 0.5 - 3 parts by weight per 100 parts by weight of the component (A).

Preferred vulcanization accelerators are of guanidine type, sulfenamide type, thiazole type and the like. These can be used independently but preferably in combination of two or more.

The rubber compostion of the present invention is preferably used for tires and most suitably for tire treads making use of characteristics that the vulcanized rubber produced from said rubber composition has a high wet-skid resistance and a low rolling resistance and is excellent in processability because of absence of bleed on the surface.

Processes for producing tires including tire treads containing a vulcanized rubber obtained by vulcanizing the rubber composition of the present invention include a method in which an unvulcanized rubber containing the rubber composition of the present invention is molded into a sheet with a commonly used kneading machine such as rolls, kneader or the like and said sheet is pasted on a tire base, placed in a mold having a tread pattern and is vulcanization-molded by heating. The temperature for vulcanization-molding is preferably 100 - 250°C and more preferably 130 - 200°C.

### EXAMPLES

The present invention will now be illustrated in further detail by means of Examples which, however, should not be construed as a limitation upon the scope of the invention.

### Examples 1 - 8 and Comparative Examples 1 - 7

Into a 20L SUS reactor substituted by nitrogen gas were charged 15L of n-hexane, 195 g of tetrahydrofuran, 1420 g of 1,3-butadiene, 580 g of styrene and 8.7 mmol of n-butyllithium, which were reacted at a temperature of 65°C for 4 hours. After adding 1.3 mmol of tetrachlorosilane, further reacted for 30 minutes. Then, 10 ml of methanol and 10 g of Sumilizer BHT were added and dried by vacuum to obtain about 2200 g of solution polymerized SBR (A1). Into a 1,500 ml Banbury mixer adjusted to 110°C were concurrently charged the ingredients shown in Table 1, 50 parts by weight of X-140 (an oil manufactured by Kyodo Sekiyu) and 6.4 parts by weight of Diablack N339 (HAF carbon black manufactured by Mitsubishi Chemicals), which were kneaded at a revolution number of rotor of 150 rpm for 5 minutes. After adding 1.5 part by weight of Sunknock N (an antioxidant manufactured by Outi Shinko Kagaku), 1.5 part by weight of Antigen 3C (an antioxidant manufactured by Sumitomo Chemical Co., Ltd.), 2 parts by weight of zinc oxide and 2 parts by weight of stearic acid as the common combination, the kneading was continued using an 8 inch open roll adjusted to 85°C. Then, 1 part by weight of Sox CZ (a vulcanizing accelerator manufactured by Sumitomo Chemical Co., Ltd.), 1 part by weight of Sox D (a vulcanizing accelerator manufactured by Sumitomo Chemical Co., Ltd.) and 1.4 part by weight of sulfur were added and the kneading was further continued using an 8 inch open roll adjusted to 40°C to give a unvulcanized compound. Said compound was subjected to press vulcanization at 160°C for 30 minutes to give a vulcanized rubber. The vulcanized rubber was evaluated by the methods described below. The results are shown in Table 1 and Table 2.

### Comparative Example 8

The procedure in Example 2 was substantially repeated except that the maximum temperature during the kneading was 180°C. The obtained composition was gelled and it is impossible to evaluate the obtained composition.

### Method of Evaluation:

(1) Tear strength and Rubber elasticity (300 % modulus):
These were measured according to JIS-K-6252. In the measurement of the tear strength, and angle type sample with no cutting was used. For both the tear strength and rubber elasticity (300 % modulus), larger value means that the mechanical strength is higher. In the present invention, tear strength is preferably 50 kgf/cm² or more and rubber elasticity (300 % modulus) is preferably 120 kgf/cm² or more.
(2) Rolling resistance (tan δ) index
A tan δ temperature dispersion curve was obtained by plotting values measured under the conditions of a frequency of 10 Hz, an initial strain of 10 %, a vibration amplitude of ± 0.25 % and a rise in temperature of 2°C/min according to JIS-K-6394 except using Rheolograph Solid L1R (manufactured by Toyo Seiki) and a sample of 50 x 5 x 2 (mm) in length x width x depth. Values of tan δ at 0°C and 60°C were obtained from this curve. The values of tan δ in Examples and Comparative Examples are expressed by indices taking the value in Comparative Example 1 as 100. Larger tan δ index at 0°C means that the wet-skid resistance is larger and smaller tan δ index at 60°C means that the rolling resistance is lower, indicating that excellent properties are obtained when used for tires or the like. In the present invention, tan δ (0°C) index is preferably 105 or more and tan δ (60°C) index is preferably 90 or less.

**Table 1**

| | | Example | | | | | | | |
|---|---|---|---|---|---|---|---|---|---|
| | | 1 | 2 | 3 | 4 | 5 | 6 | 7 | 8 |
| Composition (wt) | | | | | | | | | |
| (A) | Kind *1 | A1 | A1 | A1 | A1 | A1 | A1 | A1 | A1 |
| | Amount (Part by wt) | 100 | 100 | 100 | 100 | 100 | 100 | 100 | 100 |
| (B) | *2 Amount (Part by wt) | 78.5 | 78.5 | 78.5 | 78.5 | 78.5 | 78.5 | 78.5 | 78.5 |
| (C) | *3 Amount (Part by wt) | 6.4 | 6.4 | 6.4 | 6.4 | 6.4 | 6.4 | 6.4 | 4.5 |
| (D) | Kind *4 | D1 | D1 | D1 | D2 | D3 | D1 | D1 | D1 |
| | Amount (Part by wt) | 2 | 5 | 10 | 5 | 5 | 10 | 10 | 10 |
| Maximum Temp. during Kneading (°C) | | 150 | 150 | 150 | 150 | 150 | 130 | 160 | 130 |

| Evaluation | | | | | | | | | |
|---|---|---|---|---|---|---|---|---|---|
| Tear Strength (kgf/cm²) | | 54 | 55 | 60 | 59 | 56 | 52 | 56 | 55 |
| 300% Modulus (kgf/cm²) | | 167 | 177 | 180 | 163 | 143 | 121 | 176 | 123 |
| Tan δ (0°C) | | 119 | 120 | 118 | 114 | 107 | 113 | 119 | 116 |
| Tan δ (60°C) | | 84 | 81 | 72 | 84 | 89 | 81 | 72 | 73 |
| Bleed on surface of vulcanized rubber | | absent | absent | absent | absent | absent | absent | absent | absent |

**Table 2**

| | | Comparative example | | | | | | |
|---|---|---|---|---|---|---|---|---|
| | | 1 | 2 | 3 | 4 | 5 | 6 | 7 |
| Composition (wt) | | | | | | | | |
| (A) | Kind *1 | A1 | A1 | A1 | A1 | A1 | A2 | A2 |
| | Amount (Part by wt) | 100 | 100 | 100 | 100 | 100 | 100 | 100 |
| (B) | *2 Amount (Part by wt) | 78.5 | 78.5 | 78.5 | 78.5 | 78.5 | 78.5 | 78.5 |
| (C) | *3 Amount (Part by wt) | 6.4 | 6.4 | 6.4 | 6.4 | 6.4 | 6.4 | 6.4 |
| (D) | Kind *4 | - | D1 | D1 | D4 | D1 | - | D1 |
| | Amount (Part by wt) | 0 | 20 | 30 | 10 | 10 | 0 | 10 |
| Maximum Temp. during Kneading (°C) | | 150 | 130 | 144 | 130 | 115 | 123 | 125 |

| Evaluation | | | | | | | | |
|---|---|---|---|---|---|---|---|---|
| Tear Strength (kgf/cm²) | | 54 | 52 | 47 | 52 | 51 | 28 | 77 |
| 300% Modulus (kgf/cm²) | | 123 | 140 | 122 | 147 | 97 | 41 | 46 |
| Tan δ (0°C) | | 100 | 125 | 131 | 92 | 105 | 42 | 47 |
| Tan δ (60°C) | | 100 | 66 | 58 | 77 | 79 | 141 | 94 |
| Bleed on surface of vulcanized rubber | | absent | present | present | present | absent | absent | present |

| | | | | | | | | |
|---|---|---|---|---|---|---|---|---|
| *1 (A1): a solution polymerized SBR (styrene unit/vinyl unit: 29/49 (wt %/%),ML₁₊₄125°C=91, SiCl₄ was used as a coupling agent) (A2): a natural rubber (RSS#1) | | | | | | | | |
| *2 (B): silica (SiO2) (Ulterasil VN3G, manufactured by United silica) | | | | | | | | |
| *3 (C): a compound of the formula (1) wherein R is ethyl, a is 3 and b is 4 was used. | | | | | | | | |
| *4 (D1): a polyethylene glycol having a weight average molecular weight of 400. (D2): a polyethylene glycol having a weight average molecular weight of 4000. (D3): a polypropylene glycol having a weight average molecular weight of 4000. (D4): a ethylene glycol. (molecular weight of 62) | | | | | | | | |

## Claims

1. A rubber composition obtainable by kneading a mixture comprising 100 parts by weight of component (A), from 5 to 100 parts by weight of component (B), from 1 to 15 parts by weight of component (C) and from 1 to 15 parts by weight of component (D), the maximum temperature during the kneading being from 120 to 170°C, wherein component (A) is a solution polymerized styrene-butadiene rubber, component (B) is silica, component (C) is a silane coupling agent, and component (D) is a polyalkylene glycol having a weight average molecular weight of from 200 to 20,000.

2. The rubber composition according to Claim 1, in which component (C) is at least one compound of formula (1) or formula (2):
[(OR)₃SiCₐH₂ₐ]₂S_{b} (1)
(OR)₃SiCₐH₂ₐZ (2)
wherein R represents a methyl group or an ethyl group, a represents an integer of from 1 to 8, b represents an integer of from 1 to 6 and Z represents a mercapto group, an epoxy group, a vinyl group or an amino group which is optionally substituted by one or two methyl or ethyl groups.

3. A vulcanised rubber obtainable by vulcanizing a rubber composition according to claim 1 or 2.

4. A process for producing a rubber composition according to claim 1 or 2, or a vulcanized rubber according to claim 3 which process comprises kneading a mixture comprising 100 parts by weight of component (A), from 5 to 100 parts by weight of component (B), from 1 to 15 parts by weight of component (C), and from 1 to 15 parts by weight of component (D), the maximum temperature during the kneading being from 120 to 170°C, and optionally vulcanizing the thus obtained rubber composition, wherein component (A) is a solution polymerized styrene-butadiene rubber, component (B) is silica, component (C) is a silane coupling agent, and component (D) is a polyalkylene glycol having a weight average molecular weight of from 200 to 20,000.

5. A composition according to claim 1 or 2, or a vulcanised rubber according to claim 3, in shaped form.

6. A tire tread comprising the vulcanized rubber of claim 3.

7. A tire comprising the tire tread according to claim 6.

## Patentansprüche

1. Kautschukmasse, erhältlich durch Kneten eines Gemischs, umfassend 100 Gewichtsteile Komponente (A), 5 bis 100 Gewichtsteile Komponente (B), 1 bis 15 Gewichtsteile Komponente (C) und 1 bis 15 Gewichtsteile Komponente (D) bei einer Maximaltemperatur während des Knetens von 120 bis 170°C, wobei Komponente (A) ein lösungspolymerisierter Styrol-Butadien-Kautschuk ist, Komponente (B) Siliciumdioxid ist, Komponente (C) ein Silanhaftvermittler ist und Komponente (D) ein Polyalkylenglykol mit einem Gewichtsmittel des Molekulargewichts von 200 bis 20000 ist.

2. Kautschukmasse nach Anspruch 1, in der Komponente (C) wenigstens eine Verbindung der Formel (1) oder Formel (2) ist:
[(OR)₃SiCₐH₂ₐ]₂S_{b} (1)
(OR)₃SiCₐH₂ₐZ (2)
wobei R für eine Methylgruppe oder eine Ethylgruppe steht, a für eine ganze Zahl von 1 bis 8 steht, b für eine ganze Zahl von 1 bis 6 steht und Z für eine Mercaptogruppe, eine Epoxygruppe, eine Vinylgruppe oder eine Aminogruppe, die gegebenenfalls mit ein oder zwei Methyl- oder Ethylgruppen substituiert ist, steht.

3. Vulkanisierter Kautschuk, erhältlich durch Vulkanisieren einer Kautschukmasse nach Anspruch 1 oder 2.

4. Verfahren zur Herstellung einer Kautschukmasse nach Anspruch 1 oder 2 oder eines vulkanisierten Kautschuks nach Anspruch 3, umfassend Kneten eines Gemischs, umfassend 100 Gewichtsteile Komponente (A), 5 bis 100 Gewichtsteile Komponente (B), 1 bis 15 Gewichtsteile Komponente (C) und 1 bis 15 Gewichtsteile Komponente (D) bei einer Maximaltemperatur während des Knetens von 120 bis 170°C und gegebenenfalls Vulkanisieren der so erhaltenen Kautschukmasse, wobei Komponente (A) ein lösungspolymerisierter Styrol-Butadien-Kautschuk ist, Komponente (B) Siliciumdioxid ist, Komponente (C) ein Silanhaftvermittler ist und Komponente (D) ein Polyalkylenglykol mit einem Gewichtsmittel des Molekulargewichts von 200 bis 20000 ist.

5. Masse nach Anspruch 1 oder 2 oder vulkanisierter Kautschuk nach Anspruch 3 in geformter Gestalt.

6. Reifenlauffläche, umfassend den vulkanisierten Kautschuk nach Anspruch 3.

7. Reifen, umfassend die Reifenlauffläche nach Anspruch 6.

## Revendications

1. Composition de caoutchouc pouvant être obtenue par malaxage d'un mélange comprenant 100 parties en poids de composant (A), de 5 à 100 parties en poids de composant (B), de 1 à 15 parties en poids de composant (C), et de 1 à 15 parties en poids de composant (D), la température maximale durant le malaxage étant de 120 à 170°C, dans laquelle le composant (A) est un caoutchouc de styrène/butadiène polymérisé en solution, le composant (B) est de la silice, le composant (C) est un agent de couplage de type silane et le composant (D) est un polyalkylèneglycol ayant une masse moléculaire moyenne en masse de 200 à 20 000.

2. Composition de caoutchouc selon la revendication 1, dans laquelle le composant (C) est au moins un composé de formule (1) ou de formule (2):
[(OR)₃SiCₐH₂ₐ]₂S_{b} (1)
(OR)₃SiCₐH₂ₐZ (2)
où R représente un groupe méthyle ou un groupe éthyle, a représente un entier de 1 à 8, b représente un entier de 1 à 6 et Z représente un groupe mercapto, un groupe époxy, un groupe vinyle ou un groupe amino qui est éventuellement substitué par un ou deux groupes méthyle ou éthyle.

3. Caoutchouc vulcanisé pouvant être obtenu par vulcanisation d'une composition de caoutchouc selon la revendication 1 ou 2.

4. Procédé pour produire une composition de caoutchouc selon la revendication 1 ou 2, ou un caoutchouc vulcanisé selon la revendication 3, lequel procédé comprend le malaxage d'un mélange comprenant 100 parties en poids de composant (A), de 5 à 100 parties en poids de composant (B), de 1 à 15 parties en poids de composant (C), et de 1 à 15 parties en poids de composant (D), la température maximale durant le malaxage étant de 120 à 170°C, dans lequel le composant (A) est un caoutchouc de styrène/butadiène polymérisé en solution, le composant (B) est de la silice, le composant (C) est un agent de couplage de type silane et le composant (D) est un polyalkylèneglycol ayant une masse moléculaire moyenne en masse de 200 à 20 000.

5. Composition selon la revendication 1 ou 2, ou caoutchouc vulcanisé selon la revendication 3, sous une forme façonnée.

6. Bande de roulement de pneumatique comprenant le caoutchouc vulcanisé de la revendication 3.

7. Pneumatique comprenant la bande de roulement selon la revendication 6.
